# FASCICULE DE BREVET EUROPEEN

(11) **EP 1 444 473 B1**
(45) Date de publication et mention de la délivrance du brevet: **13.06.2007**
(21) Numéro de dépôt: 02793222.7
(22) Date de dépôt: 08.11.2002
(51) Int. Cl.: F28D 1/04

(54) **MODULE D'ECHANGE DE CHALEUR COMPORTANT UN RADIATEUR PRINCIPAL ET UN RADIATEUR SECONDAIRE**
WÄRMETAUSCHERMODUL MIT HAUPTKÜHLER UND NEBENKÜHLER
HEAT EXCHANGER MODULE COMPRISING A MAIN RADIATOR AND A SECONDARY RADIATOR

(30) Priorité: 13.11.2001 FR 0114665
(43) Date de publication de la demande: 11.08.2004
(73) Titulaire: VALEO THERMIQUE MOTEUR, 78321 La Verrière (FR)
(72) Inventeur: GUERRERO, Pascal, F-78320 Le Mesnil Saint Denis (FR); MARTINS, Carlos, 78150 LE CHESNAY (FR)
(74) Mandataire: Rolland, Jean-Christophe
(86) Numéro de dépôt international: PCT/FR2002/003851
(87) Numéro de publication internationale: WO 2003/042619

(56) Documents cités:
- EP-A- 0 643 278
- EP-A- 1 128 149
- WO-A-02/48516
- DE-A- 10 039 386
- DE-A- 19 854 544
- FR-A- 2 402 850
- GB-A- 1 433 023
- US-A- 4 949 553
- US-A- 5 086 835
- US-A- 5 101 640
- US-B1- 6 305 465

## Description

L'invention se rapporte au domaine des échangeurs de chaleur, notamment pour véhicules automobiles, et en particulier aux modules d'échange de chaleur constitués de plusieurs échangeurs de chaleur superposés pour constituer un ensemble unique.

Plus précisément, l'invention concerne un module d'échange de chaleur comprenant un échangeur de chaleur principal et au moins un échangeur de chaleur secondaire possédant chacun une boîte collectrice d'entrée, une boîte collectrice de sortie, un faisceau de tubes dans lesquels circule un fluide caloporteur, et des surfaces d'échange en relation d'échange thermique avec les tubes du faisceau, l'échangeur principal et l'échangeur secondaire étant disposés de manière que leur faisceau de tubes soit traversé par un même flux d'air.

Les échangeurs de chaleur pour véhicules automobiles se présentent généralement sous la forme d'un faisceau de tubes de circulation de fluide et de surfaces d'échange de chaleur avec le milieu extérieur, telles que des ailettes ou des intercalaires ondulés. Le faisceau est interposé entre deux boîtes collectrices qui distribuent le fluide dans les tubes de circulation. Ou bien, en variante, l'échangeur comporte une boîte collectrice unique divisée en une section d'entrée et une section de sortie.

Il est connu d'assembler sur un échangeur principal, tel qu'un radiateur de refroidissement d'un moteur de véhicule automobile, un ou plusieurs échangeurs secondaires afin de constituer un ensemble, appelé encore module, prêt à être installé dans le véhicule, les surfaces d'échange de chaleur du module pouvant être communes aux différents échangeurs. L'échangeur secondaire est constitué le plus souvent d'un refroidisseur d'air de suralimentation du moteur, d'un condenseur de climatisation ou d'un radiateur d'huile.

Dans les modules d'échange de chaleur de ce type, chaque échangeur possède son propre circuit de circulation de fluide dans lequel circule un fluide caloporteur particulier. Ceci se traduit par une multiplication des canalisations nécessaires. En outre, il est nécessaire d'amener les différents fluides de refroidissement en face avant du véhicule pour réaliser un échange de chaleur avec l'air atmosphérique ambiant. Les échangeurs sont donc fréquemment éloignés des équipements qu'ils refroidissent, ce qui se traduit par une longueur importante des canalisations et des difficultés pour aménager un passage sous le capot du véhicule pour ces canalisations, compte tenu de l'espace limité disponible.

En outre, la surface d'échange de chaleur de chaque échangeur est fixe. Elle correspond à la surface du faisceau de l'échangeur. La seule possibilité d'ajustement du refroidissement de l'échangeur est la mise en marche ou l'arrêt de la pompe de circulation du fluide de refroidissement. Un tel système offre donc peu d'adaptabilité aux conditions de charge du moteur.

La présente invention a par conséquent pour objet un module d'échange de chaleur et un système de gestion de l'énergie thermique développée par le moteur du véhicule qui remédie à ces inconvénients.

Ces buts sont atteints par le fait que le même fluide caloporteur circule dans l'échangeur de chaleur principal et dans l'échangeur de chaleur secondaire.

On obtient ainsi un composant que l'on peut appeler "multi-échangeur" qui comporte deux échangeurs de chaleur formant un ensemble mécanique unitaire, par exemple grâce à des boîtes collectrices communes, des intercalaires communs, des joue communes ou autres moyens de connexion entre les faiceaux respectifs des échangeurs. Toutefois, le module de l'invention a cette particularité que c'est le même fluide caloporteur qui circule dans les deux échangeurs de chaleur, ledit fluide pouvant être à deux températures différentes car provenant, par exemple, de deux boucles de circulation de fluide disctinctes, comme évoqué plus loin.

Ainsi, chaque échangeur pourra présenter au moins une entrée et au moins une sortie pour le fluide. Les tubes de l'un des faisceaux pourront par ailleurs être de caractéristiques identiques d'un échangeur à l'autre, au moins en ce qui concerne les tubes des échangeurs dans lesquels circulent le même fluide. Le document FR-A-2349731 montre un tel module.

Selon un mode de réalisation particulier, les surfaces d'échanges avec l'air, aussi appelées faisceaux, seront sensiblement identiques d'un échangeur à l'autre, au moins en ce qui concerne les échangeurs dans lesquels circulent le même fluide.

Conformément à l'invention, la boîte collectrice de sortie de l'échangeur principal communique avec la boîte collectrice d'entrée de l'échangeur secondaire par un orifice de passage.

Le module d'échange de chaleur comporte une cloison de partition qui divise la boîte collectrice de sortie de l'échangeur principal en une chambre de sortie principale et en une chambre de sortie secondaire, les tubes du faisceau de l'échangeur principal raccordés à la chambre de sortie principale, ainsi que la partie de la boîte collectrice d'entrée de l'échangeur principal raccordée à ces mêmes tubes constituant un radiateur principal, les tubes du faisceau de l'échangeur principal raccordés à la chambre de sortie secondaire, ainsi que la partie de la boîte collectrice d'entrée de l'échangeur principal raccordée à ces mêmes tubes et l'échangeur secondaire constituant un radiateur secondaire.

Grâce à ces caractéristiques, on peut faire circuler le même fluide caloporteur dans tout ou partie des échangeurs. Il est possible de sélectionner la partie du faisceau dans laquelle circule le fluide. L'invention permet également de réaliser différentes configurations du système de gestion de l'énergie thermique qui s'adaptent aux différentes conditions de charge du moteur du véhicule.

La surface d'échange du radiateur secondaire peut être augmentée de la partie du faisceau du radiateur principal qui communique avec l'échangeur secondaire. On obtient ainsi un radiateur secondaire de plus grande dimension, sans augmentation de l'encombrement facial du module d'échange puisque les deux échangeurs peuvent être superposés l'un à l'autre.

De préférence, le module comporte des moyens de commutation qui permettent d'ouvrir et de fermer l'orifice de passage entre la boîte collectrice de sortie de l'échangeur principal et la boîte collectrice d'entrée de l'échangeur secondaire.

La mise en oeuvre de ces moyens de commutation permet de faire varier la surface du faisceau de l'échangeur, et par conséquent sa capacité de refroidissement. Dans une réalisation particulière, les moyens de commutation sont constitués par un piston relié par une tige à un organe de commande.

L'organe de commande peut tirer ou pousser le piston pour fermer l'orifice de passage.

Dans une réalisation particulière, le module comporte une tubulure d'entrée raccordée à la boîte collectrice d'entrée de l'échangeur principal, cette tubulure unique servant à l'entrée commune du fluide caloporteur dans le radiateur principal et dans le radiateur secondaire.

Selon une autre réalisation, le module comporte une cloison de partition située entre la partie de la boîte collectrice d'entrée faisant partie du radiateur principal et la partie de la boîte collectrice d'entrée faisant partie du radiateur secondaire, cette cloison divisant la boîte collectrice de l'échangeur principal en une chambre d'entrée principale et en une chambre d'entrée secondaire, une tubulure d'entrée étant raccordée à la chambre d'entrée principale pour l'entrée du fluide caloporteur dans le radiateur principal et une autre tubulure d'entrée étant raccordée à la chambre d'entrée secondaire pour l'entrée du fluide caloporteur dans le radiateur secondaire.

Le module d'échange de chaleur peut comporter au moins un troisième échangeur appartenant à un circuit de refroidissement séparé dans lequel circule un fluide de cycle différent du fluide caloporteur de l'échangeur principal et de l'échangeur secondaire.

Dans une telle configuration, le module pourra conserver la structure d'un "multi-échangeur", c'est-à-dire, un module comportant plusieurs échangeurs de chaleur formant un ensemble mécanique unitaire, par exemple grâce à des boîtes collectrices communes, des intercalaires communs, des joue communes ou autres moyens de connexion entre les faiceaux respectifs des échangeurs

Dans une réalisation particulière, les boîtes collectrices de l'échangeur principal et/ou de l'échangeur secondaire sont divisées en plusieurs chambres par des cloisons de séparation, de manière à définir une série de passes pour le fluide caloporteur.

Les surfaces d'échange peuvent être constituées par des ailettes de refroidissement communes aux échangeurs du module. Les surfaces d'échange peuvent également être constituées par des intercalaires ondulés communs aux échangeurs du module.

Dans l'un comme l'autre cas, elles pourront être équipées de moyens de rupture du pont thermique entre les échangeurs, ceci afin d'éviter les difficultés pouvant provenir de la circulation dans ceux-ci d'un fluide à différents niveaux de température d'un échangeur à l'autre.

Les surfaces d'échange peuvent être assemblées aux tubes des échangeurs par brasage. Elles peuvent également être assemblées mécaniquement aux tubes des échangeurs.

Dans une réalisation particulière, les boîtes collectrices des échangeurs sont constituées d'une plaque collectrice et d'un couvercle assemblés par brasage. Dans une autre réalisation, les boîtes collectrices des échangeurs sont constituées d'une plaque collectrice et d'un couvercle, notamment en matière plastique, fixé mécaniquement sur la plaque collectrice.

D'autre part, l'invention concerne un système de gestion de l'énergie thermique développée par un moteur thermique de véhicule automobile comprenant un réseau principal équipé d'une pompe principale pour faire circuler un fluide de cycle caloporteur entre le moteur thermique et un radiateur de refroidissement principal échangeant de la chaleur avec l'air atmosphérique, le réseau principal comprenant, en outre, une canalisation de court-circuit et une canalisation de chauffage comprenant un aérotherme, et un réseau secondaire incluant un radiateur secondaire et une pompe secondaire, dans lequel le réseau principal et le réseau secondaire sont reliés par des moyens d'intercommunication qui permettent de faire circuler de manière contrôlée le fluide caloporteur entre le réseau principal et le réseau secondaire ou d'interdire cette circulation en fonction de l'état de charge du moteur thermique, et dans lequel le radiateur principal et le radiateur secondaire font partie d'un module d'échange de chaleur tel que défini ci-dessus.

Sous un autre aspect, l'invention concerne un module d'échange de chaleur comportant un échangeur principal et deux échangeurs secondaires, le même fluide circulant dans l'échangeur principal et les deux échangeurs secondaires.

L'invention concerne aussi un système de gestion de l'énergie thermique développée par un moteur thermique de véhicule automobile, comprenant un circuit à haute température équipé d'une pompe principale pour faire circuler un fluide caloporteur entre le moteur thermique et un échangeur principal à haute température échangeant de la chaleur avec l'air atmosphérique extérieur, le circuit à haute température comprenant en outre une canalisation de chauffage comportant un aérotherme, et un circuit à basse température incluant un échangeur secondaire et une pompe secondaire, dans lequel l'échangeur principal à haute température et l'échangeur secondaire font partie d'un module d'échange de chaleur, tel que défini précédement.

Dans une forme de réalisation, l'un des échangeurs secondaires est monté en série avec un condenseur faisant partie d'un circuit de climatisation de l'habitacle du véhicule automobile.

On peut prévoir aussi que l'un des échangeurs secondaires est monté en série avec un refroidisseur d'air de suralimentation.

Dans une variante, l'échangeur secondaire monté en série avec le refroidisseur d'air de suralimentation et le refroidisseur d'air de suralimentation lui-même font partie du circuit à haute température.

Dans une autre variante, l'échangeur secondaire monté en série avec le refroisseur d'air de suralimentation et le refroidisseur d'air de suralimentation lui-même font partie du circuit à basse température.

D'autres caractéristiques et avantages de la présente invention apparaîtront encore à la lecture de la description qui suit d'exemples de réalisation donnés à titre illustratif en référence aux figures annexées. Sur ces figures :
la figure 1 est une vue en perspective d'une première variante d'un module d'échange de chaleur conforme à la présente invention ;
la figure 2 est une vue en perspective d'une deuxième variante de réalisation d'un module d'échange de chaleur conforme à la présente invention ;
la figure 3 est une vue en perspective d'une troisième variante d'un module d'échange de chaleur conforme à la présente invention ;
la figure 4 est une vue en perspective d'un module d'échange de chaleur ;
la figure 5 est une vue en perspective d'un module d'échange de chaleur ;
la figure 6 illustre une première variante de moyens de commutation pour un module d'échange de chaleur selon l'une des figures 1 à 5 ;
la figure 7 illustre une deuxième variante de moyens de commutation pour un module d'échange de chaleur selon l'une des figures 1 à 5 ;
la figure 8 est une vue en plan d'une ailette brasée destinée à un module d'échange de chaleur conforme à la présente invention ;
la figure 9 est une vue en coupe selon la ligne IX de la Figure 8 ;
la figure 10 est une vue en coupe selon la ligne X de la Figure 8 ;
les figures 11 et 12 illustrent un assemblage entièrement mécanique d'un module d'échange de chaleur conforme à la présente invention ;
la figure 13 représente un module d'échange de chaleur conforme à l'invention comportant un troisième échangeur ;
la figure 14 est une vue en plan d'une ailette destinée au module d'échange de chaleur de la figure 13 ;
la figure 15 illustre schématiquement un système de gestion de l'énergie thermique développée par un moteur thermique conforme à la présente invention ;
la figure 16 représente la configuration du système de la figure 15 en cas de démarrage à froid ;
La figure 17 représente le système de gestion de l'énergie thermique de la figure 15 en configuration de faible charge ;
la figure 18 illustre le système de gestion de l'énergie thermique de la figure 15 en configuration de forte charge ;
les figures 19 à 22 illustrent schématiquement d'autres systèmes de gestion de l'énergie thermique conformes à la présente invention.

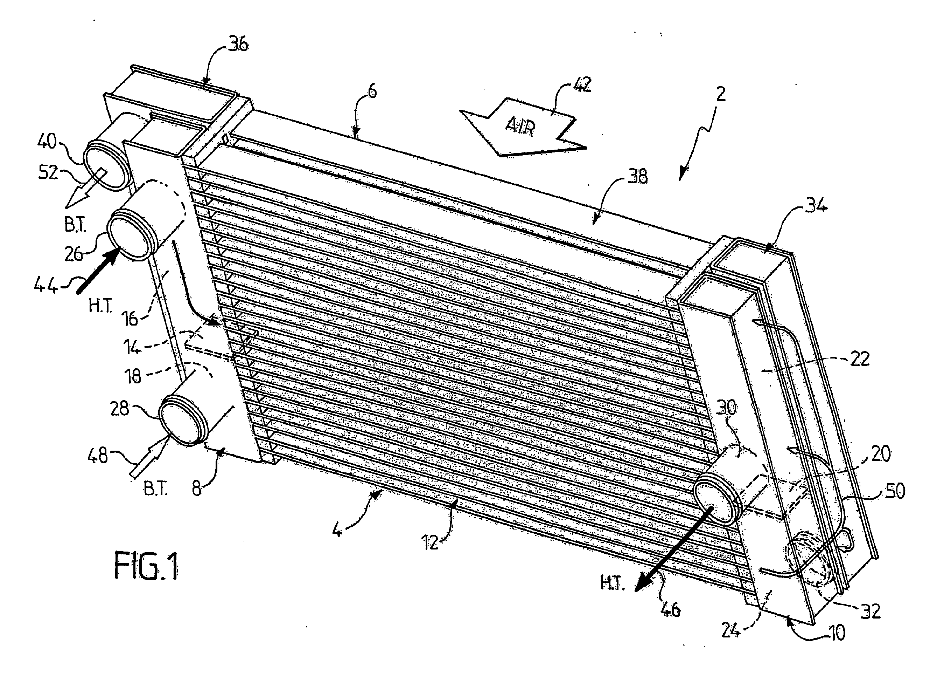

On a représenté sur la figure 1 un module d'échange de chaleur, désigné par la référence générale 2, conforme à la présente invention. Il est constitué de deux échangeurs, à savoir un échangeur de chaleur principal, désigné par la référence générale 4, et un échangeur de chaleur secondaire, désigné par la référence générale 6. L'échangeur de chaleur principal 4 est constitué d'une boîte collectrice d'entrée 8, d'une boîte collectrice de sortie 10 et d'un faisceau de tubes de circulation 12 interposé entre la boîte collectrice d'entrée 8 et la boîte collectrice de sortie 10. La boîte collectrice d'entrée 8 comporte une cloison de partition 14 qui la divise en une chambre d'entrée principale 16 et en une chambre d'entrée secondaire 18. De même, la boîte collectrice de sortie 10 comporte une cloison de partition 20 qui la divise en une chambre de sortie principale 22 et une chambre de sortie secondaire 24. Une tubulure d'entrée 26 est raccordée à la chambre d'entrée principale 16 et une tubulure d'entrée 28 est raccordée à la chambre d'entrée secondaire 18.

La tubulure 26 distribue le fluide caloporteur dans les tubes du faisceau 12 raccordés à la chambre d'entrée principale et la tubulure d'entrée 28 distribue le fluide caloporteur dans les tubes du faisceau 12 raccordés à la chambre d'entrée secondaire 18. La chambre de sortie principale 22 comporte une tubulure de sortie 30 qui permet la sortie du fluide caloporteur entré par la tubulure d'entrée 26 hors de la chambre de sortie principale 22. La chambre de sortie secondaire 24 ne comporte pas de tubulure de sortie, mais un orifice de passage 32 qui la met en communication avec une boîte collectrice d'entrée 34 de l'échangeur secondaire 6. Ce dernier possède par ailleurs une boîte collectrice de sortie 36 et un faisceau de tubes 38 interposé entre la boîte collectrice d'entrée 34 et la boîte collectrice de sortie 36. Une tubulure de sortie 40 est raccordée à la boîte collectrice de sortie 36. L'orifice de passage 32 peut être ouvert ou fermé à l'aide de moyens de commutation qui seront décrits ultérieurement.

Le faisceau de tubes 12 de l'échangeur de chaleur principal 4 et le faisceau de tubes 38 de l'échangeur secondaire 6 sont traversés par un même flux d'air schématisé par la flèche 42. Les deux échangeurs sont disposés de telle manière que l'échangeur secondaire 6 est refroidi en premier par le flux d'air 42. Les tubes du faisceau 12 sont donc refroidis par un flux d'air qui s'est déjà réchauffé au contact des tubes du faisceau 38 de l'échangeur secondaire 6.

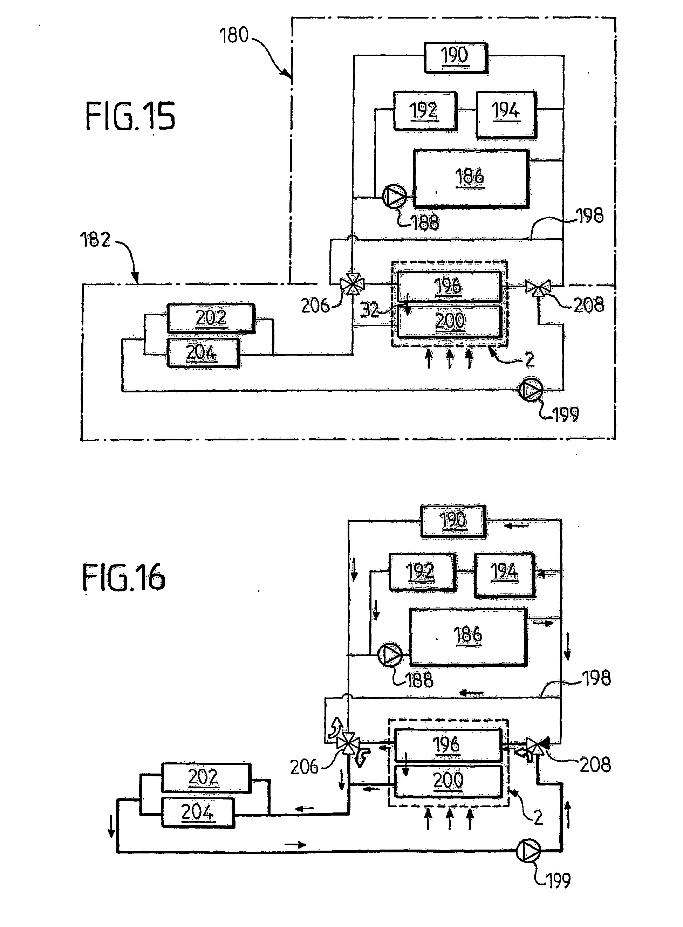

La partie des tubes du faisceau 12 de l'échangeur principal 4 raccordée à la chambre principale d'entrée 16 et à la chambre de sortie principale 22 constitue, dans ce qui suit, un radiateur principal 196 (voir Figures 15 - 18). La partie des tubes du faisceau 12 de l'échangeur principal 4 raccordée à la chambre d'entrée secondaire 18 et à la chambre de sortie secondaire 24, en série avec le faisceau de tubes 38 de l'échangeur secondaire, constitue, dans ce qui suit, un radiateur secondaire 200 (voir Figures 15 - 18). Etant donné que la température du fluide caloporteur à la sortie du radiateur secondaire 200 est plus basse que la température de sortie de ce même fluide à la sortie du radiateur principal 196, le radiateur secondaire est également appelé dans ce qui suit radiateur à basse température (B.T.) et le radiateur principal radiateur à haute température (H.T.). Le module d'échange de chaleur 2 de l'invention peut ainsi générer deux niveaux de température, par exemple une haute température égale à environ 100°C et une basse température égale à environ 60°C. Le radiateur à haute température est destiné à faire partie d'un circuit à haute température et à refroidir le moteur thermique du véhicule automobile, ainsi que des équipements qui ne nécessitent pas d'être refroidis jusqu'à une température basse. Au contraire, le radiateur basse température est raccordé à un réseau dit à basse température et il est destiné au refroidissement de fluide pour lequel le niveau de température du circuit de refroidissement du moteur est trop élevé.

La circulation du fluide caloporteur dans le module d'échange de chaleur 2 de la Figure 1 s'effectue de la manière suivante. Le fluide chaud du circuit principal, ou circuit à haute température, pénètre dans le radiateur principal 196 par la tubulure d'entrée 26 de la chambre d'entrée principale, comme schématisé par la flèche 44, traverse les tubes 12 du faisceau raccordé à la chambre d'entrée principale 16 et pénètre dans la chambre de sortie principale 22. Le fluide caloporteur refroidi sort de la chambre de sortie principale 22 par la tubulure 30, comme schématisé par la flèche 46.

Le fluide caloporteur chaud du circuit secondaire, ou circuit à basse température, pénètre dans la chambre d'entrée secondaire 18 par la tubulure d'entrée 28, comme schématisé par la flèche 48. Il parcourt la partie des tubes du faisceau 12 raccordée à la chambre d'entrée secondaire 18 et à la chambre de sortie secondaire 24. Il pénètre dans la chambre de sortie secondaire 24 et passe dans la boîte collectrice d'entrée 34 par l'orifice de passage 32, comme schématisé par les flèches 50. Le fluide parcourt alors les tubes du faisceau 38, de gauche à droite selon la figure, pour pénétrer dans la boîte collectrice de sortie 36. Le fluide caloporteur refroidi ressort par la tubulure de sortie 40, comme schématisé par la flèche 52. C'est le même fluide caloporteur qui circule dans le radiateur principal et dans le radiateur secondaire.

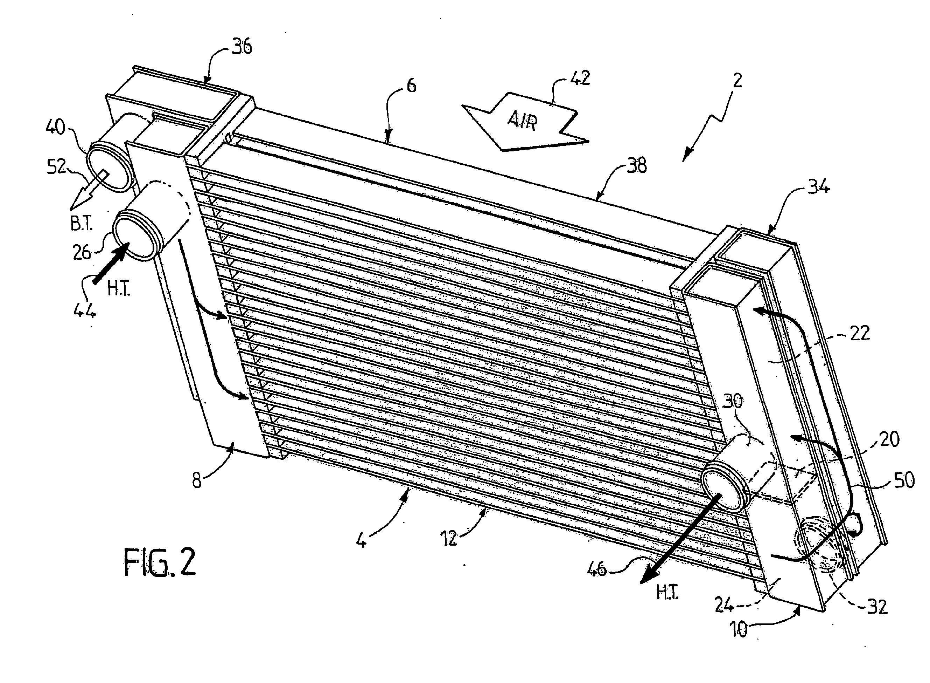

On a représenté sur la figure 2 une vue en perspective d'une variante de réalisation du module d'échange de chaleur 2 de la Figure 1. Elle s'en distingue par le fait que la boîte collectrice d'entrée 8 de l'échangeur principal 4 comporte une tubulure d'entrée unique 26 au lieu des tubulures 26 et 28 du mode de réalisation de la Figure 1. En outre, la boîte collectrice d'entrée 8 ne comporte pas de cloison de partition 14. Son volume n'est par conséquent pas divisé en une chambre d'entrée principale 16 et une chambre d'entrée secondaire 18. La tubulure d'entrée 26 sert à la fois pour l'entrée du fluide caloporteur du réseau principal ou réseau à haute température et du fluide caloporteur du réseau secondaire ou réseau à basse température, comme schématisé par la flèche 44. Dans la boîte collectrice d'entrée 8, une partie du fluide pénètre dans les tubes du faisceau 12 raccordés à la chambre de sortie principale 22, et le resté du fluide pénètre dans la partie des tubes du faisceau 12 raccordée à la chambre de sortie secondaire 24.

En revanche, la boîte collectrice de sortie 10 est divisée en une chambre de sortie principale 22 et une chambre de sortie secondaire par une cloison de partition 20, de la même manière que dans le mode de réalisation de la figure 1.

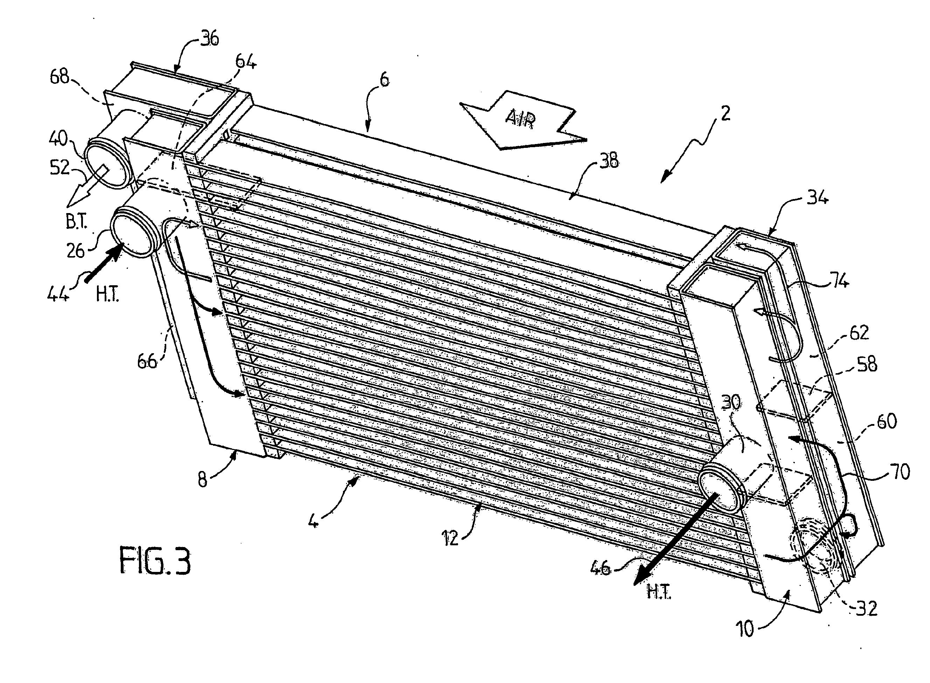

On a représenté sur la figure 3 une variante de réalisation du module d'échange de chaleur de l'invention représenté sur la figure 2. Comme le mode de réalisation de la Figure 2, ce dernier comporte une tubulure d'entrée unique 26 raccordée à la boîte collectrice d'entrée 8 de l'échangeur principal 2. La différence entre les deux réalisations tient au fait que la boîte collectrice d'entrée 34 de l'échangeur secondaire 6 comporte une cloison de séparation 58 qui la divise en une chambre inférieure 60 et une chambre supérieure 62. De la même manière, la boîte collectrice de sortie 36 de l'échangeur secondaire 6 comporte une cloison de séparation 64 qui la divise en une chambre inférieure 66 et une chambre supérieure 68.

De la sorte, le fluide caloporteur circule dans les tubes du faisceau 38 de l'échangeur secondaire 6 en effectuant une série d'allers et retours entre la boîte collectrice d'entrée 34 et la boîte collectrice de sortie 36. Ces allers et retours sont appelés passes. Dans l'exemple représenté, il y a trois passes. Après avoir pénétré dans la chambre inférieure 60 par l'orifice de passage 32, comme schématisé par la flèche 70, le fluide circule de droite à gauche, selon la figure, pour pénétrer dans la chambre inférieure 66 de la boîte collectrice de sortie 36. Il se répartit dans cette chambre et circule, de gauche à droite selon la figure, dans les tubes du faisceau 38 pour parvenir dans la chambre supérieure 62 de la boîte collectrice d'entrée 34, puis circule à nouveau de droite à gauche selon la figure, comme schématisé par la flèche 74, pour pénétrer dans la chambre supérieure 68 de la boîte collectrice de sortie 36. Le fluide caloporteur froid quitte ensuite la chambre supérieure 68 par la tubulure de sortie 40, comme schématisé par la flèche 52.

Dans l'exemple représenté, la circulation du fluide caloporteur dans le radiateur principal ou radiateur à haute température s'effectue en une seule passe. Toutefois, il va de soi que le radiateur principal pourrait également comporter des cloisons de séparation semblables aux cloisons 58 et 64 afin que la circulation du fluide s'effectue en plusieurs passes. De même, le radiateur secondaire pourrait comporter davantage de cloisons de séparation afin d'augmenter le nombre de passes.

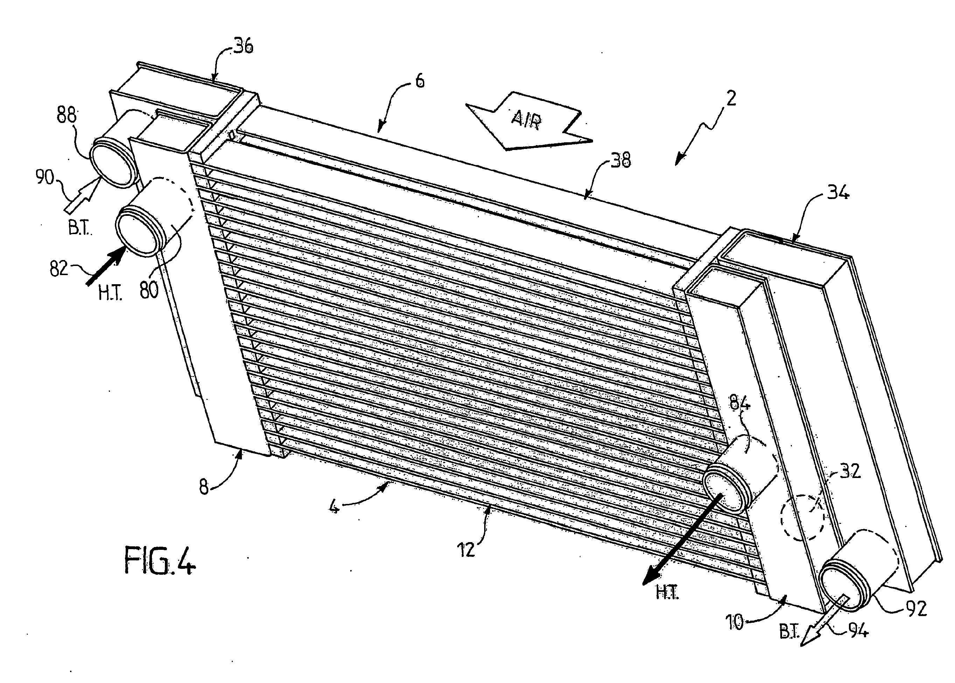

On a représenté sur la figure 4 une autre variante de réalisation d'un module d'échange de chaleur 2. Il se distingue des précédents, illustrés et décrits en référence aux figures 1 à 3, par le fait que la boîte collectrice de sortie 10 de l'échangeur de chaleur principal 4 ne comporte pas de cloison de partition qui divise son volume intérieur en deux chambres. En conséquence, le radiateur principal, ou radiateur à haute température 196, se confond avec l'échangeur de chaleur principal ou échangeur à haute température 4. De la même manière, le radiateur secondaire 200 se confond avec l'échangeur de chaleur secondaire 6.

La circulation du fluide dans ce module d'échange de chaleur s'effectue de la manière suivante. Le fluide caloporteur du circuit principal pénètre dans la boîte collectrice d'entrée 8 de l'échangeur de chaleur principal 4 par la tubulure d'entrée 80, comme schématisé par la flèche 82. Il parcourt les tubes du faisceau 12, de gauche à droite selon la figure, pour parvenir dans la boîte collectrice de sortie 10 dont il ressort refroidi par la tubulure de sortie 84, comme schématisé par la flèche 86. Le fluide du circuit secondaire, ou circuit à basse température, pénètre dans la boîte collectrice 36 du radiateur secondaire par la tubulure 88, comme schématisé par la flèche 90. Il parcourt les tubes du faisceau 38, de gauche à droite selon la figure, pour pénétrer dans la boîte collectrice de sortie 34 et ressortir par la tubulure 92, comme schématisé par la flèche 94.

Il peut ne pas y avoir d'orifice de passage entre le radiateur principal et le radiateur secondaire. Dans ce cas, la circulation de fluide entre le réseau principal et le réseau secondaire s'effectue par des moyens de communication externes au module d'échange de chaleur, comme des vannes. Le module d'échange de chaleur 2 de la Figure 4 peut également comporter un orifice de passage 32 mettant en communication la boîte collectrice de sortie 10 de l'échangeur de chaleur principal avec la boîte collectrice d'entrée 34 de l'échangeur de chaleur secondaire, comme représenté. L'orifice de passage 32 peut être ouvert ou fermé par des moyens de commutation qui seront décrits ultérieurement. Cette disposition permet de faire varier la capacité d'échange de l'échangeur en faisant circuler le fluide dans tout ou partie de ce dernier.

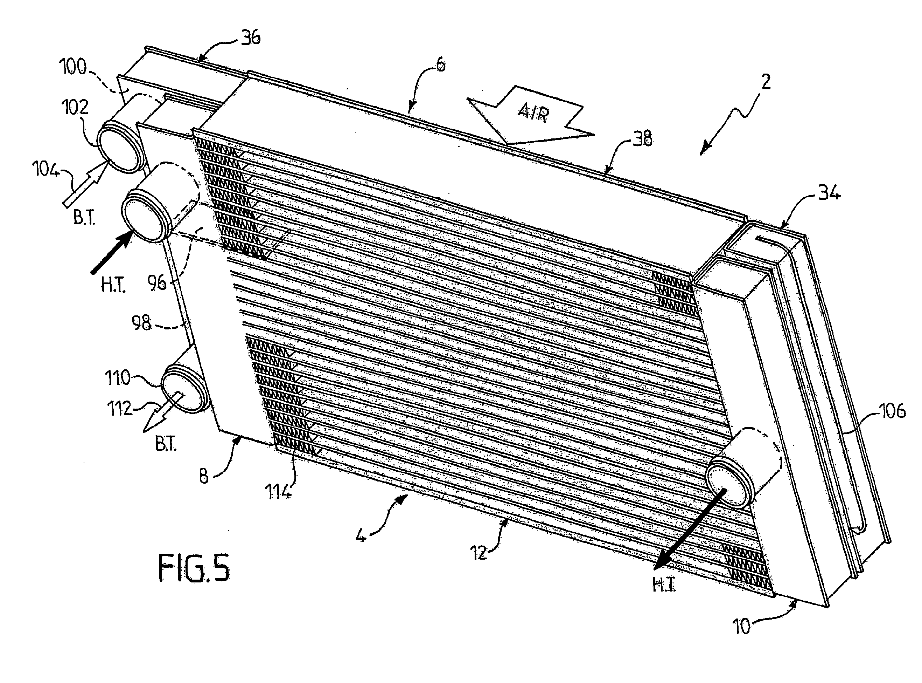

On a représenté sur la figure 5 une autre variante de réalisation d'un module d'échange de chaleur 2. Ce mode de réalisation est semblable au mode de réalisation de la Figure 4 dans le sens où la boîte collectrice de sortie de l'échangeur de chaleur principal 4 ne comporte pas de cloison de partition qui la divise en une chambre de sortie principale et une chambre de sortie secondaire. Le volume intérieur de cette boîte est donc d'une seule pièce. La circulation du fluide caloporteur dans l'échangeur de chaleur principal 4 s'effectue par conséquent de la même manière que dans le mode de réalisation représenté sur la Figure 4.

La boîte collectrice de sortie 36 de l'échangeur de chaleur principal 6 comporte une cloison de séparation 96 qui la divise en une chambre inférieure 98 et une chambre supérieure 100. Le fluide caloporteur du circuit à basse température pénètre dans la chambre supérieure 100 par la tubulure d'entrée 102, comme représenté par la flèche 104. Il parcourt la partie supérieure des tubes du faisceau, située au-dessus de la cloison de séparation 96, de gauche à droite selon la figure, pour parvenir dans la boîte collectrice 34 et se répartir dans cette dernière, comme schématisé par la flèche 106, puis il parcourt la partie inférieure des tubes du faisceau 38, située en dessous de la cloison de séparation 96, de droite à gauche selon la Figure 5, pour revenir vers la chambre inférieure 98 de la boîte collectrice 36. Le fluide secondaire refroidi quitte la chambre inférieure 98 par la tubulure de sortie 110, comme schématisé par la flèche 112. Le radiateur secondaire comporte ainsi deux passes. Toutefois, il pourrait en comporter davantage, par exemple trois ou quatre.

Le module d'échange de chaleur de la figure 5 se distingue, en outre, par le fait que les surfaces d'échange 114 en relation d'échange thermique avec les tubes du faisceau 12 de l'échangeur de chaleur principal 4 et 38 de l'échangeur de chaleur secondaire 6 sont constituées par des intercalaires ondulés.

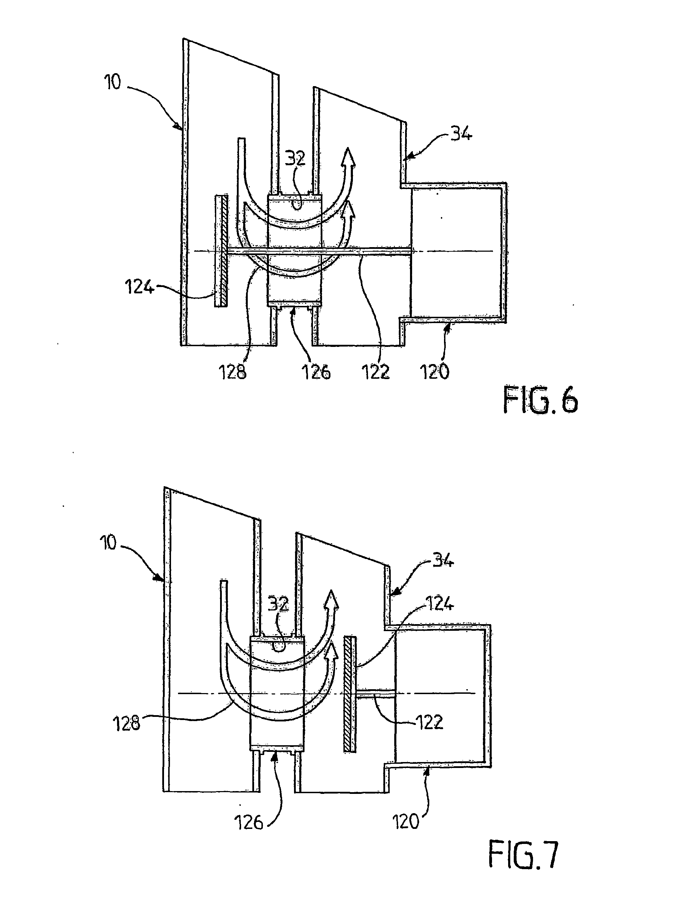

Comme on l'a exposé précédemment, l'orifice de passage 32 entre la boîte collectrice 10 de l'échangeur de chaleur principal 4 et la boîte collectrice 34 de l'échangeur de chaleur secondaire 6 peut être ouvert et fermé par des moyens de commutation. On a représenté sur les figures 6 et 7 deux exemples de réalisation de tels moyens de commutation. Un organe de commande 120 solidaire d'une paroi de la boîte collectrice d'entrée 34 de l'échangeur de chaleur secondaire 6 actionne une tige 122 qui porte un piston 124. Lorsque l'organe de commande 120 tire la tige 122, le piston 124, qui comporte un joint d'étanchéité, est attiré vers l'entrée de l'orifice de passage 32 constitué par exemple par une entretoise tubulaire 126 et il obture cet orifice. Au contraire, lorsque l'organe de commande 120 repousse la tige 122, le piston 124 s'écarte de l'ouverture de l'orifice de passage 32, ce qui permet la circulation du fluide, comme schématisé par les flèches 128.

Sur la figure 7, la réalisation des moyens de commande est identique, à l'exception du fait que le piston 124 est situé à l'intérieur de la boîte collectrice de sortie 34 de l'échangeur secondaire 6 au lieu d'être situé à l'intérieur de la boîte collectrice de sortie 10 de l'échangeur principal 4. Ainsi, lorsque l'organe de commande pousse le piston 124 vers l'entretoise tubulaire 126, l'orifice de passage 32 est fermé. Inversement, lorsque l'organe de commande 120 tire sur la tige 122, le piston 124 s'écarte de l'entretoise tubulaire 126, ce qui ouvre l'orifice de passage 32 et permet le passage du fluide, comme schématisé par les flèches 128.

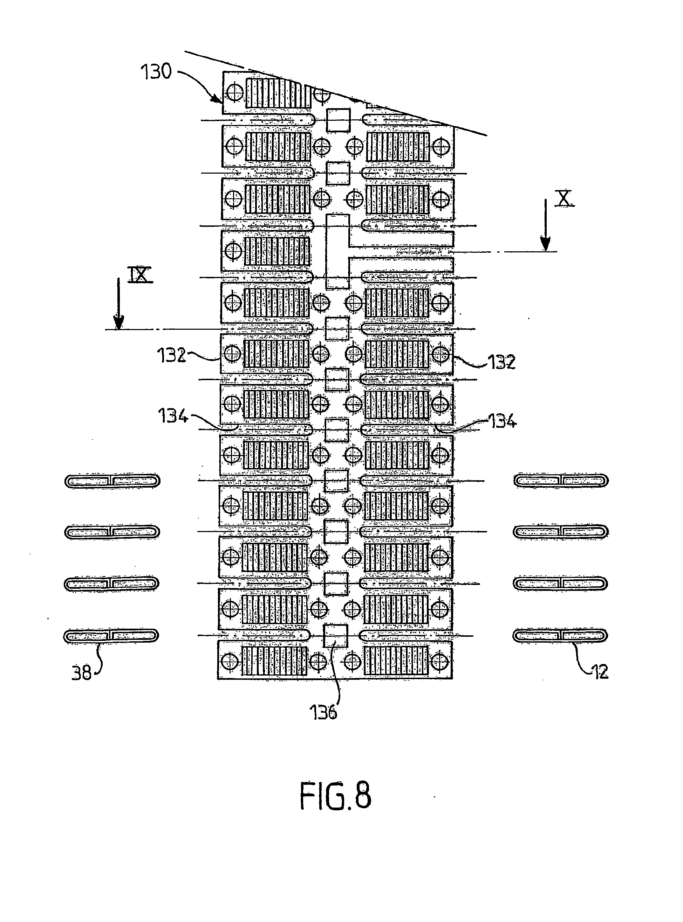

Il existe différentes technologies de réalisation des échangeurs de chaleur pour véhicules automobiles. Selon une première technologie, les échangeurs sont assemblés en une seule opération par brasage. Selon une autre technologie, les échangeurs sont assemblés en partie par brasage et en partie par des moyens mécaniques. Les surfaces d'échange de chaleur en relation d'échange thermique avec les tubes du faisceau, qui peuvent être constituées par des intercalaires ondulés ou par des ailettes planes et fines, sont alors assemblées par brasage aux tubes, tandis que le couvercle des boîtes collectrices est assemblé mécaniquement à la plaque collectrice de l'échangeur. On a illustré un mode d'assemblage mixte de ce type sur les figures 8 à 10.

La figure 8 représente une ailette fine 130 pour un module d'échange de chaleur de l'invention tel que ceux qui ont été décrits et représentés sur les figures 1 à 5. L'ailette 130 se présente sous la forme d'un rectangle très allongé comportant deux grands côtés 132 dans lesquels sont prévues des découpes allongées 134 se terminant par une extrémité arrondie destinée à recevoir les tubes du faisceau 12 de l'échangeur de chaleur principal 4 et les tubes du faisceau 38 de l'échangeur de chaleur secondaire 6. En outre, l'ailette 130 comporte des perforations carrées 136 disposées entre les deux rangs de tubes et destinées à limiter le pont thermique entre le faisceau de tubes 12 et le faisceau de tubes 38.

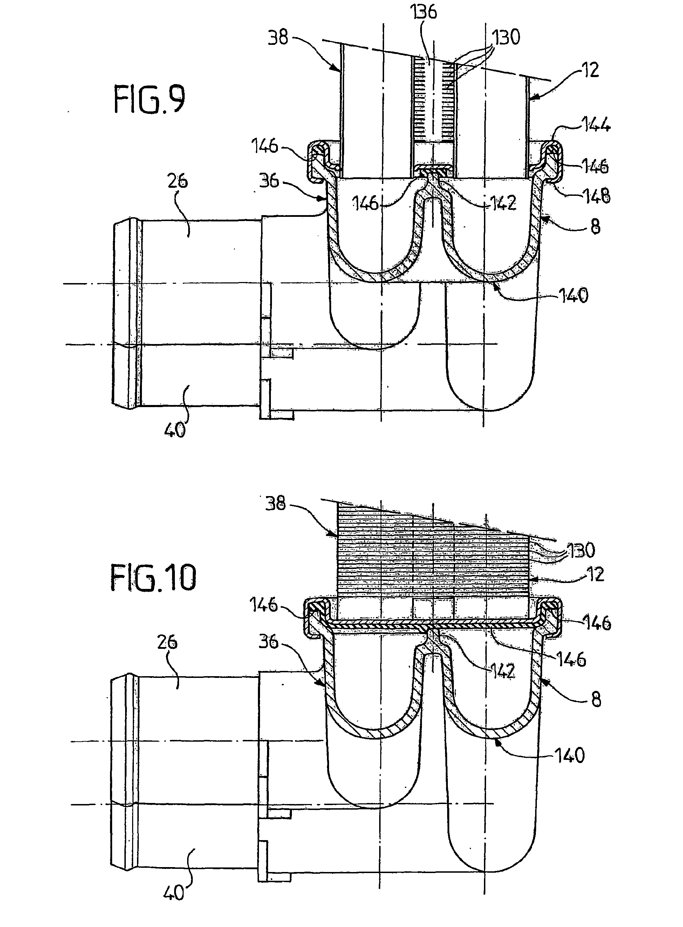

On a représenté sur la figure 9 une vue en coupe selon la ligne IX de la figure 8. Les boîtes collectrices 8 et 36 (voir figures 1 à 5) sont réalisées à l'aide d'une pièce unique 140 comportant une cloison de séparation 142. Les tubes des faisceaux 12 et 38 sont assemblés par brasage en une seule opération à la plaque collectrice 144. Des joints d'étanchéité 146 sont interposés entre la plaque collectrice 144 et la pièce 140. La plaque collectrice 144 possède un rebord serti 148 replié sur l'extrémité de la pièce 140 afin de la maintenir appliquée de manière étanche contre les joints d'étanchéité 142. On réalise ainsi un assemblage mécanique des boîtes collectrices 8 et 36 sur la plaque collectrice 144.

On remarque également sur cette figure l'interruption de la surface des ailettes 130 au niveau des perforations 136. On notera également la présence des tubulures 26 et 40.

On a représenté sur la figure 10 une vue en coupe selon la ligne X de la figure 8. Cette vue est identique à la figure 9, à l'exception du fait que le plan de coupe ne passe pas par les échancrures 136, de telle sorte que la surface des ailettes 130 est continue. D'autre part, le plan de coupe montre la section non interrompue de la plaque collectrice 144.

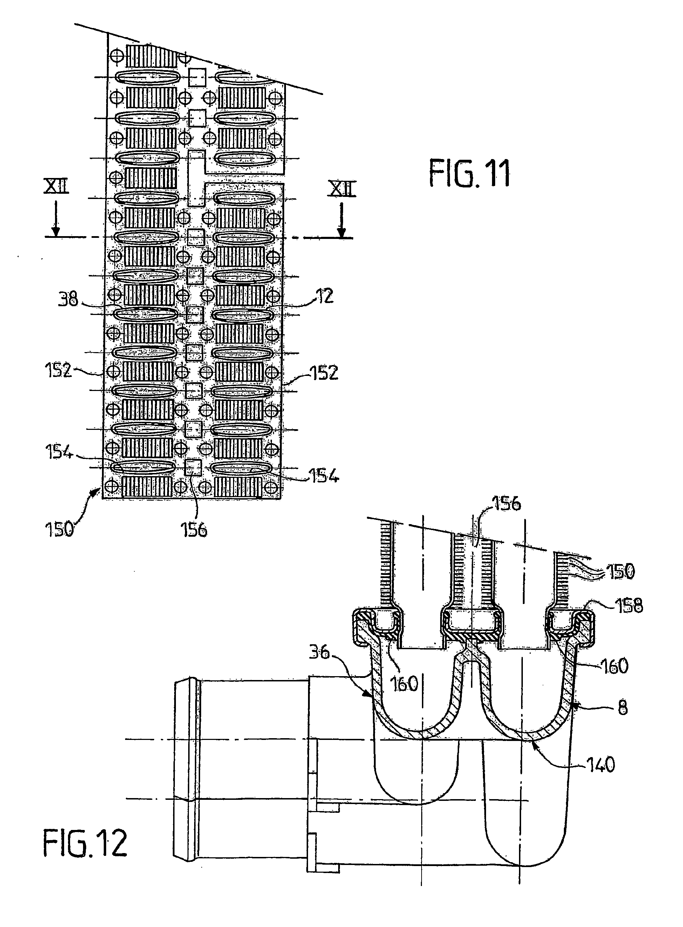

Selon encore une autre technologie, les pièces constitutives de l'échangeur peuvent être assemblées exclusivement par des moyens mécaniques tels que le sertissage. On a illustré une telle réalisation sur les figures 11 et 12. L'ailette 150 (figure 11) comporte deux côtés allongés 152 comportant des perforations en forme d'ellipses 154 aplaties pour l'introduction des tubes du faisceau 12 de l'échangeur de chaleur principal 4 et des tubes du faisceau 38 de l'échangeur de chaleur secondaire 6. Ces perforations sont entièrement fermées parce qu'il est nécessaire de réaliser un contact thermique entre la paroi extérieure des tubes des faisceaux 12 et 38 et les ailettes 150 en évasant les tubes au moyen d'une olive. L'ailette 150 comporte également des perforations 156 de forme carrée situées en regard des tubes afin d'éviter un pont thermique entre les deux échangeurs.

Sur la figure 12, la plaque collectrice 158 comporte un joint d'étanchéité 160 qui permet de réaliser une jonction étanche avec la pièce 140 dans laquelle sont formées les boîtes collectrices 8 et 36. Les tubes des faisceaux 12 et 38 sont évasés pour réaliser un contact thermique avec la plaque collectrice 158.

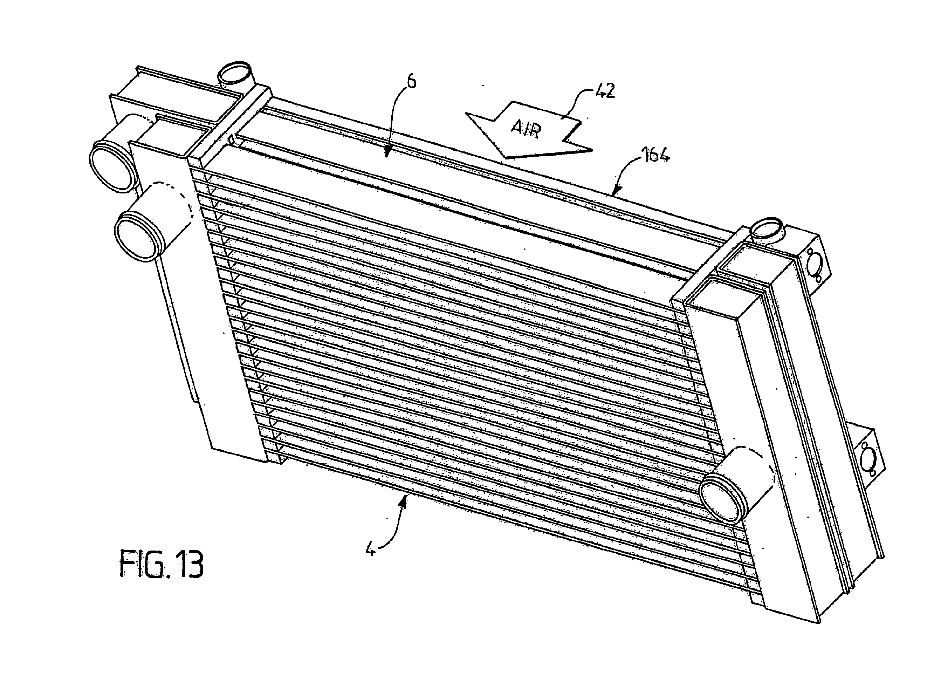

On a représenté sur la figure 13 une vue en perspective d'un autre mode de réalisation de l'invention. Le module d'échange de chaleur représenté comporte un troisième échangeur désigné par la référence générale 164. Cet échangeur supplémentaire est traversé par le même flux d'air 42 que l'échangeur secondaire 6 et l'échangeur principal 4. En outre, il est situé devant l'échangeur secondaire 6, de telle sorte qu'il est refroidi en premier. Un échangeur supplémentaire tel que l'échangeur 164 est intégré au module d'échange de chaleur de l'invention lorsque l'on souhaite refroidir des fluides autres que le fluide caloporteur des réseaux principaux et secondaires par l'air ambiant, par exemple le fluide calorigène du circuit de climatisation si on ne dispose pas un condenseur à eau dans le système de refroidissement. L'échangeur 164 pourrait être également un radiateur de refroidissement de l'huile de lubrification de la boîte de vitesse ou du moteur.

L'échangeur supplémentaire 164 peut être prévu dans un mode de réalisation quelconque d'un module de chaleur de l'invention et, en particulier, dans l'un quelconque des modes de réalisation décrits en référence aux figures 1 à 5.

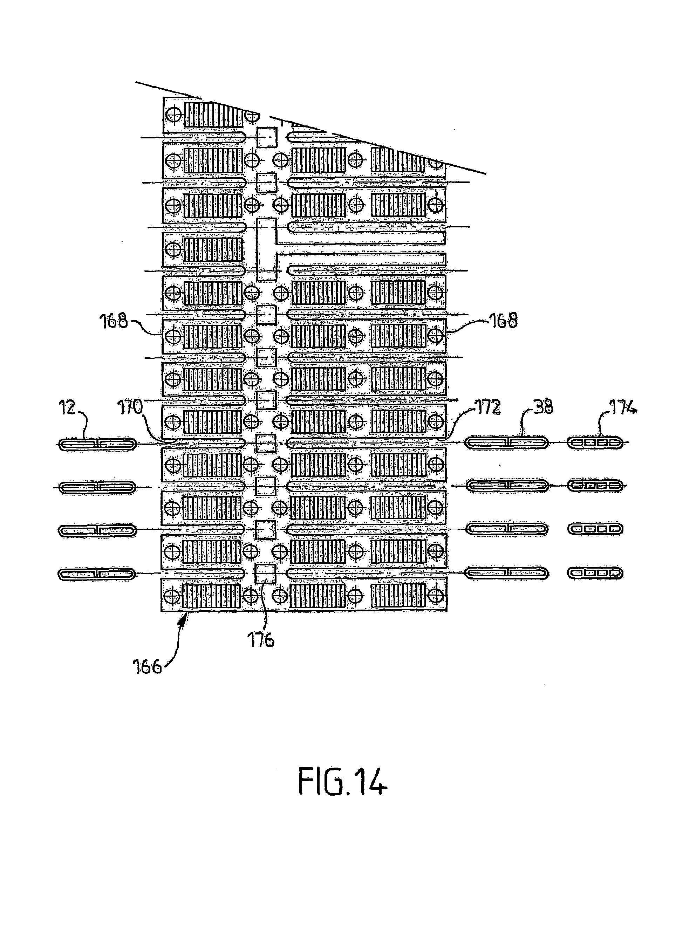

On a représenté sur la figure 14 une ailette plane fine 166 de type brasé, similaire à l'ailette 130 représentée sur la figure 8. L'ailette 166 se présente sous la forme d'un rectangle très allongé comportant deux grands côtés 168 dans lesquels sont prévues des découpes allongées et arrondies à leur extrémité. Toutefois, ces découpes sont de deux types. Les découpes 170 sont prévues pour recevoir une seule rangée de tubes, à savoir les tubes du faisceau 12 de l'échangeur principal 4. Au contraire, les découpes 172 sont plus profondes. Elles sont prévues pour recevoir deux rangées de tubes, à savoir les tubes du faisceau 38 de l'échangeur de chaleur secondaire 6, et les tubes 174 de l'échangeur supplémentaire 164. Ainsi, l'ailette 166 est commune aux trois échangeurs. On notera, en outre, qu'elle comporte des perforations carrées 176 disposées en regard des échancrures 170 et 172, et destinées à éviter, comme on l'a déjà exposé, un pont thermique entre les rangées de tubes.

On a représenté sur la figure 15 un système de gestion de l'énergie thermique développée par un moteur thermique comportant un module d'échange de chaleur 2 conforme à la présente invention. Ce système de gestion est constitué d'un réseau principal, schématisé par le rectangle en traits mixtes 180, et d'un réseau secondaire, schématisé par le rectangle en traits mixtes 182. Le réseau principal 180 comporte un moteur à combustion interne 186 et une pompe principale 188 qui fait circuler le fluide caloporteur dans le réseau principal, particulièrement dans le moteur 186. Le réseau principal comporte également une dérivation sur laquelle est monté un radiateur de chauffage 190, également appelé aérotherme. De manière facultative, il peut encore comporter une dérivation sur laquelle sont montés des échangeurs de chaleur qui échangent de la chaleur avec le fluide caloporteur du réseau principal et qui sont destinés au refroidissement d'équipements du véhicule tels qu'un refroidisseur de gaz d'échappement 192 ou un refroidisseur d'huile de lubrification moteur 194. Le réseau principal comporte enfin une dérivation sur laquelle est monté le radiateur principal 196, et une canalisation de dérivation 198 qui permet de court-circuiter le radiateur principal 196.

Le réseau secondaire 182 est constitué d'une pompe de circulation 199 qui fait circuler le fluide caloporteur dans le radiateur secondaire ou radiateur à basse température 200. Le réseau à basse température peut également comporter, de manière optionnelle, des échangeurs d'équipement qui servent à refroidir des équipements optionnels du véhicule tels qu'un refroidisseur d'air de suralimentation 202 et un condenseur de climatisation 204. L'orifice de passage 32 entre le radiateur 196 et le radiateur secondaire 200 a été schématisé par une flèche.

On notera que les références 196 et 200 désignent ici le radiateur principal et le radiateur secondaire, et non l'échangeur principal 4 et l'échangeur secondaire 6. En effet, comme on l'a exposé précédemment, le radiateur principal peut coïncider avec l'échangeur principal et, de même, le radiateur secondaire peut coïncider avec l'échangeur secondaire. Cependant, le radiateur secondaire 200 est le plus souvent constitué de l'échangeur de chaleur secondaire 6 et d'une partie plus ou moins importante du faisceau de l'échangeur de chaleur principal 4, tandis que le radiateur principal 196 n'occupe qu'une partie de l'échangeur principal 4.

Des moyens d'interconnexion permettent de mettre en communication le réseau principal 180 et le réseau secondaire 182. Dans l'exemple représenté, ces moyens d'interconnexion sont constitués par une vanne à quatre voies 206 et par une vanne à trois voies 208.

Le module d'échange de chaleur 2 utilisé dans le système de gestion de l'énergie thermique de la figure 15 comporte une entrée unique commune au réseau principal et au réseau secondaire et deux sorties. Il correspond aux modes de réalisation représentés sur les figures 2 et 3.

On notera, en outre, que le radiateur principal 196 constitue une partie commune au réseau principal 180 et au réseau secondaire 182.

La vanne 206 permet de gérer la circulation du fluide caloporteur dans l'aérotherme 190, dans la canalisation de dérivation 198 et le radiateur 196.

On a représenté sur la figure 16 la configuration du système de gestion de l'énergie thermique de la figure 15 dans une configuration de démarrage à froid avec chauffage de l'habitacle du véhicule. Dans cette configuration, le radiateur principal 196 et le radiateur secondaire 200 produisent de l'eau froide pour alimenter les échangeurs du type condenseur de climatisation afin d'obtenir une montée en température aussi rapide que possible du moteur thermique 186, le fluide caloporteur du circuit principal 180 emprunte la canalisation de dérivation 198 de manière à éviter de se refroidir dans le radiateur principal 196.

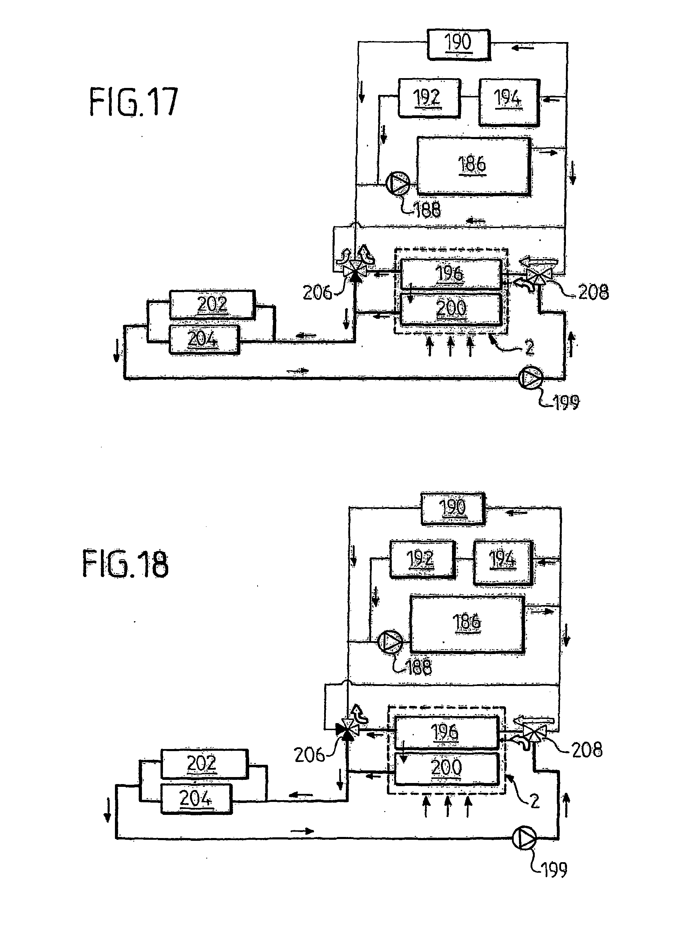

La figure 17 représente une configuration de faible charge du moteur thermique. Le radiateur principal 196 et le radiateur secondaire 200 produisent de l'eau froide pour alimenter les échangeurs du type condenseur de climatisation 204 et refroidisseur d'air de suralimentation 202. Le fluide caloporteur traverse les deux radiateurs l'un après l'autre. La vanne 206 assure une régulation de la température du moteur 186. Lorsque la température de ce dernier est inférieure à une valeur de seuil, par exemple 100°C, le fluide emprunte la canalisation de dérivation 198. Lorsque la température du moteur monte au-dessus de cette température, une certaine partie, par exemple 10 ou 20 %, de la quantité de fluide caloporteur qui traverse le radiateur principal est introduite dans le réseau principal 180 afin de refroidir le moteur.

La figure 18 représente une configuration de forte charge du moteur 186. La vanne 206 est positionnée de telle sorte que le radiateur principal 196 produit de l'eau froide pour refroidir le moteur 186, et le radiateur secondaire 200 produit de l'eau froide pour refroidir les échangeurs d'équipement 202 et 204. C'est la vanne à quatre voies 206 qui assure la régulation de la température du moteur en répartissant les débits de fluide caloporteur entre la canalisation de dérivation 198 et le radiateur principal 196. Cette configuration correspond à une forte charge du moteur dans laquelle il est nécessaire de faire circuler une quantité importante de fluide caloporteur pour évacuer la puissance thermique rejetée par ce dernier. Cette configuration peut également correspondre à un véhicule qui roule en hiver avec la climatisation éteinte et lorsque, de plus, on ne souhaite pas refroidir l'air de suralimentation.

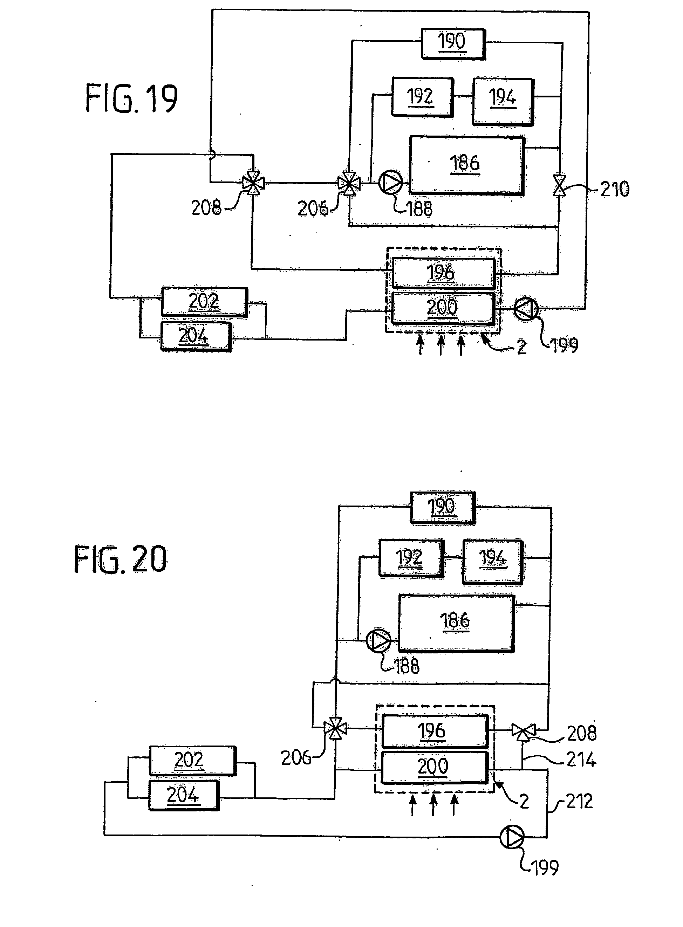

Les figures 19 à 22 illustrent d'autres systèmes de gestion de l'énergie thermique développée par un moteur thermique, qui s'apparentent à celui de la figure 15. Les éléments communs avec ceux de la figure 15 sont désignés par les mêmes références numériques. Ces différents systèmes ont des boucles pouvant interagir entre elles, mais l'invention s'applique aussi à des boucles qui n'interagissent pas.

Le système de la figure 19 diffère notamment de celui de la Figure 15 par le fait que les radiateurs 196 et 200 ne communiquent pas entre eux par un orifice de passage 32. De plus, les emplacements des vannes 206 et 208 et de la pompe 199 sont différents, et une autre vanne 210 est intercalée sur une conduite entre le refroidisseur d'huile 194 et le radiateur principal 196.

Le système de la figure 20 est très proche de celui de la figure 15. La aussi, les radiateurs 196 et 200 ne communiquent pas entre eux. Le radiateur 200 est relié à la pompe 199 par une conduite 212 dans laquelle débouche une conduite 214 menant à la vanne 208.

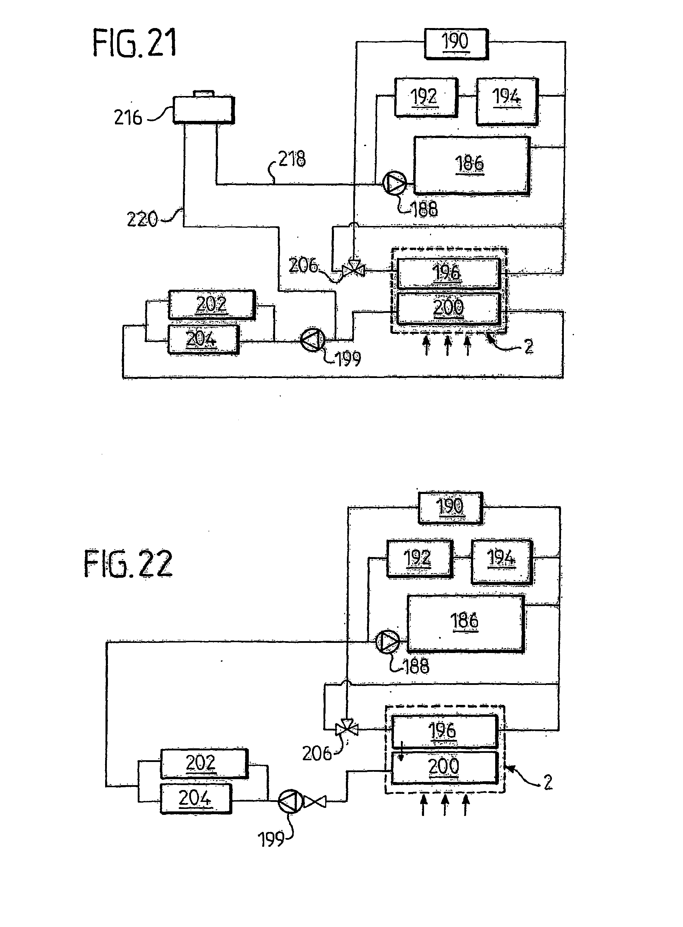

Le système de la figure 21 est proche de celui de la Figure 15, mais les boucles associées aux radiateurs 196 et 200 sont reliées entre elles uniquement par un vase d'expansion commun 216. Celui-ci est relié aux deux boucles par deux conduites 218 et 220 qui débouchent respectivement en amont des pompes 188 et 199. Comme dans le cas des figures 19 et 20, les radiateurs 196 et 200 ne communiquent pas entre eux par un orifice de passage 32.

Le système de la figure 22 est proche de celui de la figure 21. Mais les radiateurs 196 et 200 communiquent entre eux par un orifice passage, comme symbolisé par la flèche. De plus le vase d'expansion commun est supprimé.

Un autre mode de réalisation d'un système de gestion de l'énergie thermique développé par un moteur thermique comportant un module d'échange de chaleur conforme à la présente invention peut encore être envisagé. Ce système de gestion est constitué d'un circuit à haute température et d'un circuit à basse température.

Dans ce mode de réalisation, le module d'échange de chaleur est constitué de trois rangs de tubes, à savoir un premier rang de tubes, un deuxième rang de tubes et un troisième rang de tubes. L'ordre des rangs de tubes est déterminé par rapport au sens du flux d'air qui les traverse. Le rang de tubes situé en amont par rapport à l'écoulement du flux d'air est traversé en premier et il bénéficie de la température d'air la plus basse. Le rang de tubes suivant est traversé par le flux d'air qui s'est échauffé au contact des tubes du premier rang. Il est donc moins bien refroidi que le premier rang. Enfin, le troisième rang de tubes est le plus mal refroidi puisque l'air a déjà traversé les deux premiers rangs et s'est par conséquent échauffé à leur contact. Par suite, le fluide de refroidissement qui circule dans le premier rang de tubes sera mieux refroidi que le fluide qui circule dans le second rang de tubes, lequel sera lui-même mieux refroidi que le fluide caloporteur qui traverse le troisième rang de tubes.

Dans ce mode de réalisation, les boîtes collectrices d'entrée et de sortie ne sont pas divisées. En conséquence, chacun des rangs de tubes constitue un échangeur. Il s'agit donc aussi bien d'un échangeur que d'un rang de tubes. En conséquence, le module d'échange de chaleur est constitué de trois échangeurs superposés, traversés par un même flux d'air. Les échangeurs peuvent disposer d'ailettes ou d'intercalaires communs qui font que le module est lié physiquement. Le même fluide de refroidissement, à savoir le liquide de refroidissement du moteur, circule dans les trois échangeurs.

Les échangeurs de second et troisième rang font partie du circuit à haute température tandis que l'échangeur de premier rang fait partie du circuit à basse température.

Le circuit à haute température comporte en outre, comme décrit précédemment, un moteur à combustion interne et une pompe principale qui fait circuler un fluide caloporteur dans le circuit à haute température. Il comporte également une dérivation sur laquelle est monté un aérotherme. Il comporte en outre une vanne à quatre voies. Une voie d'entrée est reliée à la sortie du moteur, une voie de sortie à l'aérotherme, une seconde voie de sortie à l'échangeur de second rang et une quatrième voie, constituant une troisième voie de sortie, est reliée à l'échangeur de troisième rang. Un refroidisseur d'air de suralimentation est monté en série avec l'échangeur de second rang.

Le circuit à basse température comporte une pompe de circulation électrique qui fait circuler le fluide caloporteur de refroidissement du moteur dans l'échangeur de rang 1, ledit échangeur constituant ainsi un radiateur à basse température. Ledit radiateur à basse température est monté en série avec un condenseur faisant partie d'un circuit de climatisation de l'habitacle du véhicule automobile.

Dans cette réalisation les échangeurs de rang 2 et 3 font en permanence partie du circuit à haute température, tandis que l'échangeur de rang 1 fait en permanence partie du circuit-à basse température.

Une autre variante de réalisation du système de gestion de l'énergie thermique évoquée précédemment est décrite dans la suite. Ce système est constitué, comme plus haut, d'un circuit à haute température et d'un circuit à basse température. Le module d'échange de chaleur, comme le module précédent, est constitué de trois rangs de tubes, constituant trois échangeurs de chaleur superposés et traversés par un même flux d'air. Toutefois, dans cette réalisation, les échangeurs des deux premiers rangs font partie du circuit à basse température, tandis que l'échangeur de troisième rang fait seul partie du circuit de refroidissement à haute température. Outre le moteur, la pompe de circulation et l'aérotherme, le circuit à haute température comporte une vanne à trois voies. L'entrée est reliée à la sortie du fluide de refroidissement du moteur. Une sortie de la vanne est dirigée sur l'aérotherme, tandis que l'autre sortie amène le fluide à l'entrée de l'échangeur.

L'échangeur de rang 1 est monté en série avec un condenseur, faisant partie du circuit de climatisation de l'habitacle d'un véhicule automobile, tandis que l'échangeur de rang 2 est monté en série avec un refroidisseur d'air de suralimentation. Ces échangeurs et les équipements avec lesquels ils sont montés en série font partie du circuit de refroidissement à basse température. Dans ce système de gestion, comme dans le précédent, les liaisons sont fixes. En d'autres termes, l'échangeur de rang 2 fait toujours partie du circuit à basse température, sans pouvoir être attribué au circuit à haute température.

Bien entendu, d'autres systèmes de gestion sont envisageables dans le cadre de l'invention.

## Revendications

1. Module d'échange de chaleur destiné à être parcouru par un fluide d'une première et d'une deuxième boucle d'échange de chaleur ledit fluide étant le même dans les deux boucles, ledit module comprenant un échangeur de chaleur principal (4) et au moins un échangeur de chaleur secondaire (6) possédant chacun une boîte collectrice d'entrée (8, 34), une boîte collectrice de sortie (10, 36), un faisceau de tubes (12, 38) dans lesquels circule un fluide caloporteur et des surfaces d'échange (130, 150) en relation d'échange thermique avec les tubes du faisceau, ledit échangeur principal et ledit échangeur secondaire formant un ensemble mécanique unitaire et étant disposés de manière que leur faisceau de tubes soit traversé par un même flux d'air (42), **caractérisé en ce que** la boîte collectrice de sortie (10) de l'échangeur principal (2) communique avec la boîte collectrice d'entrée (34) de l'échangeur secondaire (6) par un orifice de passage (32) et **en ce que** ledit module comporte une cloison de partition (20) qui divise la boîte collectrice de sortie (10) de l'échangeur principal en une chambre de sortie principale (22) et en une chambre de sortie secondaire (24) comportant l'orifice de passage (32), les tubes du faisceau de l'échangeur principal raccordés à la chambre de sortie principale (22), ainsi que la partie de la boîte collectrice d'entrée (8) de l'échangeur principal raccordée à ces mêmes tubes constituant un radiateur principal (196), les tubes du faisceau de l'échangeur principal raccordés à la chambre de sortie secondaire (24), ainsi que la partie de la boîte collectrice d'entrée (8) de l'échangeur principal (4) raccordée à ces mêmes tubes et l'échangeur secondaire (6) constituant un radiateur secondaire (200),

2. Module d'échange de chaleur selon la revendication précédente, **caractérisé en ce qu'**il comporte des moyens de commutation permettant d'ouvrir et de fermer l'orifice de passage (32) entre la boîte collectrice de sortie (10) de l'échangeur principal (4) et la boîte collectrice d'entrée (34) de l'échangeur secondaire (6).

3. Module d'échange de chaleur selon la revendication précédente, **caractérisé en ce que** les moyens de commutation sont constitués par un piston (124) relié par une tige (122) à un organe de commande (120).

4. Module d'échange de chaleur selon la revendication précédente, **caractérisé en ce que** l'organe de commande (120) tire le piston (124) pour fermer l'orifice de passage (32).

5. Module d'échange de chaleur selon la revendication précédente, **caractérisé en ce que** l'organe de commande (120) pousse le piston (124) pour fermer l'orifice de passage (32).

6. Module d'échange de chaleur selon l'une des revendications précédentes, **caractérisé en ce qu'**il comporte une tubulure d'entrée unique (26) raccordée à la boîte collectrice d'entrée (8) de l'échangeur principal (4), cette tubulure unique (26) servant à l'entrée commune du fluide caloporteur dans le radiateur principal (196) et dans le radiateur secondaire (200).

7. Module d'échange de chaleur selon l'une des revendications précédentes, **caractérisé en ce qu'**il comporte une cloison de partition (14) située entre la partie de la boîte collectrice d'entrée (8) faisant partie du radiateur principal (196) et la partie de la boîte collectrice d'entrée (8) faisant partie du radiateur secondaire, et qui divise la boîte collectrice d'entrée (8) de l'échangeur principal (4) en une chambre d'entrée principale (16) et une chambre d'entrée secondaire (18), une tubulure d'entrée (26) étant raccordée à la chambre d'entrée principale (16) pour l'entrée du fluide caloporteur dans le radiateur principal (196) et une autre tubulure d'entrée (28) étant raccordée à la chambre d'entrée secondaire (18) pour l'entrée du fluide caloporteur dans le radiateur secondaire (200).

8. Module d' échange de chaleur selon l'une des revendications précédentes, **caractérisé en ce qu'**il comporte un troisième échangeur (164) appartenant à un circuit de refroidissement séparé et dans lequel circule un fluide de cycle différent du fluide de cycle caloporteur de l'échangeur principal (196) et de l'échangeur secondaire (200).

9. Module d'échange de chaleur selon l'une des revendications précédentes, **caractérisé en ce que** les boites collectrices de l'échangeur principal (4) et/ou de l'échangeur secondaire (6) sont divisées en plusieurs chambres par des cloisons de séparation, de manière à définir une série de passes pour le fluide caloporteur.

10. Module d'échange de chaleur selon l'une des revendications précédentes, **caractérisé en ce que** les surfaces d'échange sont constituées par des ailettes (130, 150) de refroidissement communes aux échangeurs du module.

11. Module d'échange de chaleur selon l'une des revendications 1 à 9, **caractérisé en ce que** les surfaces d'échange sont constituées par des intercalaires ondulés (114) communs aux échangeurs du module.

12. Module d'échange de chaleur selon l'une des revendications précédentes, **caractérisé en ce que** les surfaces d'échange sont assemblées aux tubes des échangeurs par brasage.

13. Module d'échange de chaleur selon l'une des revendications 1 à 11, **caractérisé en ce que** les surfaces d'échange sont assemblées mécaniquement aux tubes des échangeurs.

14. Module d'échange de chaleur selon l'une des revendications précédentes, **caractérisé en ce que** les boîtes collectrices des échangeurs sont constituées d'une plaque collectrice et d'un couvercle assemblés par brasage.

15. Module d'échange de chaleur selon l'une des revendications 1 à 13, **caractérisé en ce que** les boîtes collectrices des échangeurs sont constituées d'une plaque collectrice et d'un couvercle, notamment en matière plastique, fixé mécaniquement sur la plaque collectrice.

16. Système de gestion de l'énergie thermique développée par un moteur thermique de véhicule automobile, comprenant un réseau principal (180) équipé d'une pompe principale (188) pour faire circuler un fluide de cycle caloporteur entre le moteur thermique (186) et un radiateur de refroidissement principal (196) échangeant de la chaleur avec l'air atmosphérique extérieur, le réseau principal comprenant, en outre, une canalisation de court-circuit (198) et une canalisation de chauffage comportant un aérotherme (190), et un réseau secondaire (182) incluant un radiateur secondaire (200) et une pompe secondaire (199), **caractérisé en ce que** le réseau principal (180) et le réseau secondaire (182) sont reliés par des moyens d'interconnexion (206, 208) qui permettent de faire circuler de manière contrôlée le fluide caloporteur entre le réseau principal et le réseau secondaire ou d'interdire cette circulation en fonction de l'état de charge du moteur thermique, et **en ce que** le radiateur principal (196) et le radiateur secondaire (200) font partie d'un module d'échange de chaleur (2) selon l'une des revendications précédentes.

17. Module d'échange de chaleur selon la revendication 1, **caractérisé en ce qu'**il comporte un échangeur principal (256) et deux échangeurs secondaires (252, 254) et **en ce que** le même fluide circule dans l'échangeur principal (256) et les deux échangeurs secondaires (252, 254).

18. Système de gestion de l'énergie thermique développée par un moteur thermique de véhicule automobile, comprenant un circuit à haute température (230, 270) équipé d'une pompe principale (188) pour faire circuler un fluide caloporteur entre le moteur thermique (186) et un échangeur principal à haute température (256) échangeant de la chaleur avec l'air atmosphérique extérieur, le circuit à haute température (230, 270) comprenant en outre une canalisation de chauffage comportant un aérotherme (190), et un circuit à basse température (240, 280) incluant un échangeur secondaire (252) et une pompe secondaire (199), **caractérisé en ce que** l'échangeur principal à haute température (256) et l'échangeur secondaire (252) font partie d'un module d'échange de chaleur (250, 290) selon la revendication précédente.

19. Système de gestion de l'énergie thermique selon la revendication précédente, **caractérisé en ce que** l'un des échangeurs secondaires (252) est monté en série avec un condenseur (204) faisant partie d'un circuit de climatisation de l'habitacle du véhicule automobile.

20. Système de gestion de l'énergie thermique selon la revendication 18, **caractérisé en ce que** l'un des échangeurs secondaires (254) est monté en série avec un refroidisseur d'air de suralimentation (202).

21. Système de gestion de l'énergie thermique selon la revendication précédente, **caractérisé en ce que** l'échangeur secondaire (254) monté en série avec le refroidisseur d'air de suralimentation(202) et le refroidisseur d'air de suralimentation lui-même font partie du circuit à haute température (230).

22. Système de gestion de l'énergie thermique selon la revendication 20, **caractérisé en ce que** l'échangeur secondaire (254) monté en série avec le refroisseur d'air de suralimentation (202) et le refroidisseur d'air de suralimentation (202) lui-même font partie du circuit à basse température (280).

## Claims

1. Heat exchange module through which a fluid of a first and second heat exchange circuit is intended to flow, said module comprising a main heat exchanger (4) and at least one secondary heat exchanger (6), each possessing an inlet header box (8, 34), an outlet header box (10, 36), a stack of tubes (12, 38) in which a coolant fluid circulates, exchange surfaces (130, 150) associated with heat exchange with the tubes of the stack, said main exchanger and said secondary exchanger forming a unitary mechanical assembly and being disposed such that their stack of tubes is passed through by a same air flow (42), **characterized in that** the outlet header box (10) of the main exchanger (4) communicates with the inlet header box (34) of the secondary exchanger (6) via a pass-through opening (32) and **in that** said module contains a partition wall (20) dividing the outlet header box (10) of the main exchanger into a main outlet chamber (22) and a secondary outlet chamber (24) comprising the pass-through opening (32), those tubes of the stack of the main exchanger which are connected to the main outlet chamber (22), as well as that part of the inlet header box (8) of the main exchanger which is connected to these same tubes, constituting a main radiator (196), whilst those tubes of the stack of the main exchanger which are connected to the secondary outlet chamber, as well as that part of the inlet header box (8) of the main exchanger (4) which is connected to these same tubes and the secondary exchanger (6), constitute a secondary radiator (200).

2. Heat exchange module according to the preceding claim, **characterized in that** it comprises commutation means by which the pass-through opening (32) between the outlet header box (10) of the main exchanger (4) and the inlet header box (34) of the secondary exchanger (6) can be opened and closed.

3. Heat exchange module according to the preceding claim, **characterized in that** the commutation means are constituted by a piston (124) linked by a rod (122) to an actuating member (120).

4. Heat exchange module according to the preceding claim, **characterized in that** the actuating member (120) pulls the piston (124) in order to close the pass-through opening (32).

5. Heat exchange module according to the preceding claim, **characterized in that** the actuating member (120) pushes the piston (124) in order to close the pass-through opening (32).

6. Heat exchange module according to one of the preceding claims, **characterized in that** it comprises a single inlet pipe socket (26) connected to the inlet header box (8) of the main exchanger (4), this single pipe socket (26) serving for the common admission of the coolant fluid into the main radiator (196) and into the secondary radiator (200).

7. Heat exchange module according to one of the preceding claims, **characterized in that** it contains a partition wall (14) situated between that part of the inlet header box (8) which forms part of the main radiator (196) and that part of the inlet header box (8) which forms part of the secondary radiator, this wall dividing the inlet header box (8) of the main exchanger (4) into a main inlet chamber (16) and a secondary inlet chamber (18), an inlet pipe socket (26) being connected to the main inlet chamber (16) for the admission of the coolant fluid into the main radiator (196) and another inlet pipe socket (28) being connected to the secondary inlet chamber (18) for the admission of the coolant fluid into the secondary radiator (200).

8. Heat exchange module according to one of the preceding claims, **characterized in that** it comprises a third exchanger (164) belonging to a separate cooling circuit in which a cycle fluid different than the coolant cycle fluid of the main exchanger (196) and of the secondary exchanger (200) circulates.

9. Heat exchange module according to one of the preceding claims, **characterized in that** the header boxes of the main exchanger (4) and/or of the secondary exchanger (6) are divided into a plurality of chambers by dividing walls, in such a way as to define a series of passes for the coolant fluid.

10. Heat exchange module according to one of the preceding claims, **characterized in that** the exchange surfaces are constituted by cooling fins (130, 150) common to the exchangers of the module.

11. Heat exchange module according to one Claims 1 to 9, **characterized in that** the exchange surfaces are constituted by corrugated inserts (114) common to the exchangers of the module.

12. Heat exchange module according to one of the preceding claims, **characterized in that** the exchange surfaces are joined to the tubes of the exchangers by soldering.

13. Heat exchange module according to one of Claims 1 to 11, **characterized in that** the exchange surfaces are joined mechanically to the tubes of the exchangers.

14. Heat exchange module according to one of the preceding claims, **characterized in that** the header boxes of the exchangers are constituted by a collecting plate and a lid joined together by soldering.

15. Heat exchange module according to one of Claims 1 to 13, **characterized in that** the header boxes of the exchangers are constituted by a collecting plate and a lid, especially made of plastics material, fixed mechanically onto the collecting plate.

16. Management system for the thermal energy generated by a thermal engine of an automotive vehicle, comprising a main network (180) equipped with a main pump (188) for circulating a coolant cycle fluid between the thermal engine (186) and a main cooling radiator (196) exchanging heat with the external atmospheric air, the main network additionally comprising a short-circuit duct (198) and a heating duct containing a unit heater (190), and a secondary network (182) including a secondary radiator (200) and a secondary pump (199), **characterized in that** the main network (180) and the secondary network (182) are linked by interconnecting means (206, 208) by which the coolant fluid can be circulated in a controlled manner between the main network and the secondary network or this circulation can be prohibited as a function of the state of load of the thermal engine, and **in that** the main radiator (196) and the secondary radiator (200) form part of a heat exchange module (2) according to one of the preceding claims.

17. Heat exchange module according to Claim 1, **characterized in that** it comprises a main exchanger (256) and two secondary exchangers (252, 254) and **in that** the same fluid circulates in the main exchanger (256) and the two secondary exchangers (252, 254).

18. Management system for the thermal energy generated by a thermal engine of an automotive vehicle, comprising a high-temperature circuit (230, 270) equipped with a main pump (188) for circulating a coolant fluid between the thermal engine (186) and a high-temperature main exchanger (256) exchanging heat with the external atmospheric air, the high-temperature circuit (230, 270) additionally comprising a heating duct containing a unit heater (190), and a low-temperature circuit (240, 280) including a secondary exchanger (252) and a secondary pump (199), **characterized in that** the high-temperature main exchanger (256) and the secondary exchanger (252) form part of a heat exchange module (250, 290) according to the preceding claim.

19. Thermal energy management system according to the preceding claim, **characterized in that** one of the secondary exchangers (252) is connected in series to a condenser (204) forming part of an air-conditioning system of the passenger compartment of the automotive vehicle.

20. Thermal energy management system according to Claim 18, **characterized in that** one of the secondary exchangers (254) is connected in series to a charge-air cooler (202).

21. Thermal energy management system according to the preceding claim, **characterized in that** the secondary exchanger (254) connected in series to the charge-air cooler (202) and the charge-air cooler itself form part of the high-temperature circuit (230).

22. Thermal energy management system according to Claim 20, **characterized in that** the secondary exchanger (254) connected in series to the charge-air cooler (202) and the charge-air cooler (202) itself form part of the low-temperature circuit (280).

## Patentansprüche

1. Wärmeaustauschmodul, das dazu bestimmt ist, durch ein Fluid einer ersten und einer zweiten Wärmeaustauschschleife durchströmt zu werden, wobei das Fluid in den zwei Schleifen das gleiche ist, wobei das Modul einen Hauptwärmetauscher (4) und mindestens einen Nebenwärmetauscher (6) umfasst, wobei jeder davon einen Eintrittssammelkasten (8, 34) und einen Austrittssammelkasten (10, 36), ein Bündel von Rohren (12, 38), in denen ein wärmeübertragendes Fluid umläuft, und Austauschflächen (130, 150), die in Wärmeaustauschbeziehung mit den Rohren des Bündels stehen, umfasst, wobei der Hauptwärmetauscher und der Nebenwärmetauscher eine mechanische Konstruktionseinheit bilden und derart angeordnet sind, dass ihr Bündel von Rohren durch einen gleichen Luftstrom (42) durchlaufen wird, **dadurch gekennzeichnet, dass** der Austrittssammelkasten (10) des Hauptwärmetauschers (2) über ein Durchgangsloch (32) mit dem Eintrittssammelkasten (34) des Nebenwärmetauschers (6) in Verbindung steht, und **dadurch**, dass das Modul eine Trennwand (20) umfasst, die den Austrittssammelkasten (10) des Hauptwärmetauschers in eine Hauptaustrittskammer (22) und eine Nebenaustrittskammer (24), die das Durchgangsloch (32) umfasst, unterteilt, wobei die Rohre des Bündels des Hauptwärmetauschers an die Hauptaustrittskammer (22) angeschlossen sind, und der Teil des Eintrittssammelkastens (8) des Hauptwärmetauschers an die gleichen Rohre angeschlossen ist, wodurch ein Hauptkühler (196) gebildet wird, wobei die Rohre des Bündels des Hauptwärmetauschers, die an die Nebenaustrittskammer (24) angeschlossen sind, und der Teil des Eintrittssammelkastens (8) des Hauptwärmetauschers (4), der an diese gleichen Rohre und den Nebenwärmetauscher (6) angeschlossen ist, einen Nebenkühler (200) bilden.

2. Wärmeaustauschmodul nach dem vorhergehenden Anspruch, **dadurch gekennzeichnet, dass** es Umschaltmittel umfasst, die das Öffnen und Schließen des Durchgangslochs (32) zwischen dem Austrittssammelkasten (10) des Hauptwärmetauschers (4) und dem Einrittssammelkasten (34) des Nebenwärmetauschers (6) ermöglichen.

3. Wärmeaustauschmodul nach dem vorhergehenden Anspruch, **dadurch gekennzeichnet, dass** die Umschaltmittel durch einen Kolben (124) gebildet sind, der über einen Stab (122) mit einem Bedienteil (120) verbunden ist.

4. Wärmeaustauschmodul nach dem vorhergehenden Anspruch, **dadurch gekennzeichnet, dass** das Bedienteil (120) den Kolben (124) zieht, um das Durchgangsloch (32) zu schließen.

5. Wärmeaustauschmodul nach dem vorhergehenden Anspruch, **dadurch gekennzeichnet, dass** das Bedienteil (120) den Kolben (124) schiebt, um das Durchgangsloch (32) zu schließen.

6. Wärmeaustauschmodul nach einem der vorhergehenden Ansprüche, **dadurch gekennzeichnet, dass** es einen einzigen Eintrittsanschlussstutzen (26) umfasst, der an den Eintrittssammelkasten (8) des Hauptwärmetauschers (4) angeschlossen ist, wobei dieser einzige Anschlussstutzen (26) zum gemeinsamen Eintritt des wärmeübertragenden Fluids in den Hauptkühler (196) und den Nebenkühler (200) dient.

7. Wärmeaustauschmodul nach einem der vorhergehenden Ansprüche, **dadurch gekennzeichnet, dass** es eine Trennwand (14) umfasst, die sich zwischen dem Teil des Eintrittssammelkastens (8), der zum Hauptkühler (196) gehört, und dem Teil des Eintrittssammelkastens (8), der zum Nebenkühler gehört, befindet, und die den Eintrittssammelkasten (8) des Hauptwärmetauschers (4) in eine Haupteintrittskammer (16) und eine Nebeneintrittskammer (18) unterteilt, wobei ein Eintrittsanschlussstutzen (26) zum Eintritt des wärmeübertragenden Fluids in den Hauptkühler (196) an die Haupteintrittskammer (16) angeschlossen ist, und ein anderer Eintrittsanschlussstutzen (28) zum Eintritt des wärmeübertragenden Fluids in den Nebenkühler (200) an die Nebeneintrittskammer (18) angeschlossen ist.

8. Wärmeaustauschmodul nach einem der vorhergehenden Ansprüche, **dadurch gekennzeichnet, dass** es einen dritten Wärmetauscher (164) umfasst, der zu einem Kühlkreis gehört, der getrennt ist und in dem ein Kreislauffluid umläuft, das sich von dem wärmeübertragenden Kreislauffluid des Hauptwärmetauschers (196) und des Nebenwärmetauschers (200) unterscheidet.

9. Wärmeaustauschmodul nach einem der vorhergehenden Ansprüche, **dadurch gekennzeichnet, dass** die Sammelkästen des Hauptwärmetauschers (4) und/oder des Nebenwärmetauschers (6) durch Trennwände in mehrere Kammern unterteilt sind, derart, dass für das wärmeübertragende Fluid eine Reihe von Durchläufen definiert wird.

10. Wärmeaustauschmodul nach einem der vorhergehenden Ansprüche, **dadurch gekennzeichnet, dass** die Austauschflächen durch Kühlrippen (130, 150) gebildet sind, die den Wärmetauschern des Moduls gemein sind.

11. Wärmeaustauschmodul nach einem der Ansprüche 1 bis 9, **dadurch gekennzeichnet, dass** die Austauschflächen durch gewellte Zwischenlagen (114) gebildet sind, die den Wärmetauschern des Moduls gemein sind.

12. Wärmeaustauschmodul nach einem der vorhergehenden Ansprüche, **dadurch gekennzeichnet, dass** die Austauschflächen durch Löten mit den Rohren der Wärmetauscher verbunden sind.

13. Wärmeaustauschmodul nach einem der Ansprüche 1 bis 11, **dadurch gekennzeichnet, dass** die Austauschflächen mechanisch mit den Rohren der Wärmetauscher verbunden sind.

14. Wärmeaustauschmodul nach einem der vorhergehenden Ansprüche, **dadurch gekennzeichnet, dass** die Sammelkästen der Wärmetauscher aus einer durch Löten verbundenen Sammelplatte und einem durch Löten verbundenen Deckel gebildet sind.

15. Wärmeaustauschmodul nach einem der Ansprüche 1 bis 13, **dadurch gekennzeichnet, dass** die Sammelkästen der Wärmetauscher aus einer Sammelplatte und einem Deckel, insbesondere aus Kunststoff, der mechanisch auf der Sammelplatte befestigt ist, gebildet sind.

16. System zur Verwaltung der Wärmeenergie, die durch einen Kraftfahrzeug-Verbrennungsmotor entwickelt wird, das ein Hauptnetz (180) umfasst, das mit einer Hauptpumpe (188) versehen ist, um ein wärmeübertragendes Kreislauffluid zwischen dem Verbrennungsmotor (186) und einem Hauptkühler (196) zum Umlauf zu bringen, wobei Wärme mit der Luft der äußeren Atmosphäre ausgetauscht wird, wobei das Hauptnetz ferner eine Kurzschlussrohrleitung (198) und eine Heizungsrohrleitung, die ein Heizgerät (190) umfasst, und ein Nebennetz (182) umfasst, das einen Nebenkühler (200) und eine Nebenpumpe (199) umfasst, **dadurch gekennzeichnet, dass** das Hauptnetz (180) und das Nebennetz (182) durch Zusammenschaltungsmittel (206, 208) miteinander verbunden sind, die es ermöglichen, das wärmeübertragende Fluid auf kontrollierte Art und Weise zwischen dem Hauptnetz und dem Nebennetz in Umlauf zu bringen, oder diesen Umlauf in Abhängigkeit vom Ladezustand des Verbrennungsmotors zu sperren, und **dadurch**, dass der Hauptkühler (196) und der Nebenkühler (200) Teil eines Wärmeaustauschmoduls (2) nach einem der vorhergehenden Ansprüche sind.

17. Wärmeaustauschmodul nach Anspruch 1, **dadurch gekennzeichnet, dass** es einen Hauptwärmetauscher (256) und zwei Nebenwärmetauscher (252, 254) umfasst, und dass das gleiche Fluid im Hauptwärmetauscher (256) und in den zwei Nebenwärmetauschern (252, 254) umläuft.

18. System zur Verwaltung der Wärmeenergie, die durch einen Kraftfahrzeug-Verbrennungsmotor entwickelt wird, das einen Hochtemperaturkreis (230, 270) umfasst, der mit einer Hauptpumpe (188) ausgestattet ist, um ein wärmeübertragendes Fluid zwischen dem Verbrennungsmotor (186) und einem Hochtemperatur-Hauptwärmetauscher (256) zum Umlauf zu bringen, wobei Wärme mit der Luft der äußeren Atmosphäre ausgetauscht wird, wobei der Hochtemperaturkreis (230, 270) ferner eine Heizungsrohrleitung, die ein Heizgerät (190) umfasst, und einen Niedrigtemperaturkreis (240, 280) umfasst, der einen Nebenwärmetauscher (252) und eine Nebenpumpe (199) umfasst, **dadurch gekennzeichnet, dass** der Hochtemperatur-Hauptwärmetauscher (256) und der Nebenwärmetauscher (252) Teil eines Wärmeaustauschmoduls (250, 290) nach dem vorhergehenden Anspruch sind.

19. System zur Verwaltung von Wärmeenergie nach dem vorhergehenden Anspruch, **dadurch gekennzeichnet, dass** einer der Nebenwärmetauscher (252) in Reihe mit einem Kondensator (204) befestigt ist, der Teil eines Klimatisierungskreises der Fahrgastzelle des Kraftfahrzeugs ist.

20. System zur Verwaltung von Wärmeenergie nach Anspruch 18, **dadurch gekennzeichnet, dass** einer der. Nebenwärmetauscher (254) in Reihe mit einem Ladeluftkühler (202) befestigt ist.

21. System zur Verwaltung von Wärmeenergie nach dem vorhergehenden Anspruch, **dadurch gekennzeichnet, dass** der Nebenwärmetauscher (254), der in Reihe mit dem Ladeluftkühler (202) befestigt ist, und der Ladeluftkühler selbst Teil des Hochtemperaturkreises (230) sind.

22. System zur Verwaltung von Wärmeenergie nach Anspruch 20, **dadurch gekennzeichnet, dass** der Nebenwärmetauscher (254), der in Reihe mit dem Ladeluftkühler (202) befestigt ist, und der Ladeluftkühler (202) selbst Teil des Niedrigtemperaturkreises (280) sind.
